# EUROPEAN PATENT SPECIFICATION

(11) **EP 2 865 907 B1**
(45) Date of publication and mention of the grant of the patent: **28.06.2017**
(21) Application number: 13306472.5
(22) Date of filing: 25.10.2013
(51) Int. Cl.: F16C 29/08, F16C 41/00, F16C 35/00

(54) **Linear drive assembly**
Linearantriebsanordnung
Ensemble d'entraînement linéaire

(43) Date of publication of application: 29.04.2015
(73) Proprietor: NTN-SNR Roulements, 74000 Annecy (FR)
(72) Inventor: Grote, Detlef, 33818 Leopoldshöhe (DE)
(74) Representative: Alatis

(56) References cited:
- EP-A1- 0 790 422
- DE-A1- 4 334 311
- DE-A1- 19 941 587
- US-A- 4 512 208
- US-A- 5 842 283

## Description

### TECHNICAL FIELD OF THE INVENTION

This invention relates to a linear drive assembly comprising a stationary tubular housing and a movable slider movable onto the tubular housing.

### BACKGROUND ART

US 4 512 208 A discloses a linear drive provided with a stiff elongated tubular housing formed with an axially extending slit. A drive spindle is retained within the tubular housing in bearings located in end flanges of the housing, driven for example by a motor. A slider is guided on the housing by interengaging slit and projection means and coupled to at least one spindle nut through the slit. The slit is closed by a flexible cover which is lifted out of the slit at one end of the slider and re-seated in the slit at the other end of the slider to form a completely enclosed housing in which the spindle and spindle nuts are protected from environmental contamination, and which can retain lubricant for high-efficiency, low-noise force transmission and conversion. The cover has two flexible longitudinal webs located to fit within the slit each on one side thereof. Each web is provided with one laterally protruding projection that is received in a corresponding lateral recess in the slit to provide a resilient snap fit between the flexible cover and the housing.

This snap fit coupling between the cover and housing may, however become less than satisfactory over time, particularly in challenging operational conditions, e.g. in the presence of dust, or particles in the environment. In such cases, pollution may find its way between the webs and the side walls of the slit and penetrate the interior of the housing.

It has been suggested in DE 43 34 311 to provide the housing one pair of longitudinal grooves of rhombus-shaped internal cross-section on each side of the longitudinal slit, and to provide the cover with two pairs of corresponding web-like projections each with a cylindrical bulge positioned to penetrate into a corresponding one of the grooves. While this configuration provides an improved sealing of the longitudinal slit, a considerable force and energy is necessary to lift the webs of the cover out of the grooves at one end of the slider and re-seat them in the grooves at the other end of the slider. Moreover, this configuration does not easily allow to modify the sealing properties of the system, e.g. to use the same housing and cover in a very challenging environment that requires a perfect sealing even at the price of the energy needed to move the slider, and in a less challenging environment that would allow a less constrained sealing.

A linear motion guide assembly with the features of the preamble of claim 1 is known from EP 0 790 422.

### SUMMARY OF THE INVENTION

The foregoing shortcomings of the prior art are addressed by the present invention. According to one aspect of the invention, there is provided a linear motion guide assembly comprising a tubular housing provided with a longitudinal internal cavity for accommodating a linear drive, a longitudinal slit between the longitudinal cavity and an outer face of the housing and a pair of longitudinal side grooves formed on the outer face of the housing on each side of the longitudinal slit, each of the side grooves having opposed concave side wall portions. A cover band covers the longitudinal slit and side grooves. The cover band is provided with a pair of longitudinal resilient protruding portions each arranged so as to be releasably engaged and clamped in a respective one of the side grooves of the housing. A slider slides or rolls on a longitudinal track of the housing between two end positions, the slider extending through the longitudinal slit to be coupled to the linear drive, the slider having two longitudinal ends and being provided with guiding means for lifting a portion of the cover band between the longitudinal ends of the slider on a path out of engagement with the side grooves. Each longitudinal resilient protruding portion comprises a pair of parallel ribs spaced apart from one another, each rib having a convex external face facing away from the other rib and an internal face facing the other rib. The convex external face of each rib faces and contacts a respective one of the opposed concave side wall portions when the pair of longitudinal resilient protruding portions is clamped in the side grooves.

The side grooves are spaced apart from the longitudinal slit, to improve the sealing properties of the cover. Thanks to the two parallel ribs in each groove, which are spaced apart from one another in the lateral direction, there is no continuous path at the interface between the ribs and the grooves for the pollution to migrate from the environment into the slit. Even if the external one of the two ribs were to be in contact with pollution, e.g. dust or solid particles, the internal rib in the same groove would remain free from such pollution.

As each rib has its own flexibility, it becomes possible to satisfy two apparently conflicting requirements, namely a reduced insertion force on the one hand and an important contact surface between the sealing ribs and the side wall of the groove and/or an important contact pressure on the other hand.

As will be explained in detail later on, it becomes also possible to increase the contact force without changing the whole cover, by inserting an additional resilient spacer sandwiched between the two ribs to reduce their flexion. Hence, the same housing and cover can easily adapted to a variety of environments.

According to a preferred embodiment, each of the side grooves has a narrow portion opening into a wider internal cavity. Once the ribs have passed the narrow portion, they can expand into the cavity and provide the desired snap fit. Advantageously, each of the side grooves has a tapered entry portion converging towards the narrow portion. The tapered entry guides the ribs towards the narrow portion and contributes to their progressive deformation, which is necessary for them to pass through the narrow portion, which forms a bottleneck.

Preferably each longitudinal resilient protruding portion has a maximum width measured between the convex external faces of the parallel ribs, which is wider than the intermediate narrow section of the respective side groove. This provides the desired snap fit effect once the ribs have entered the associated groove.

According to a preferred embodiment, the two ribs of each longitudinal resilient protruding portion have distal ends which, in cross-section, converge towards one another. These converging portions contribute to guiding each longitudinal resilient protruding portion upon entry into the associated groove. These converging portions are even more effective when combined with a tapered entry into the groove, as mentioned earlier.

According to a preferred embodiment, the convex faces of the two ribs of each longitudinal resilient protruding portion have proximal ends, which, in cross-section, converge towards one another. The proximal end or reduced width seats in the corresponding portion of reduced width of the associated groove.

According to a preferred embodiment, the ribs have flexible proximal end. Hence, each rib is able to pivot about its proximal end during the insertion and extraction phases.

According to a preferred embodiment, the internal faces are concave faces. Preferably the concave internal faces of the two ribs of each longitudinal resilient protruding portion form a cavity. As stated above, such a cavity is a discontinuity of the interface between the longitudinal resilient protruding portion and the associated groove. Moreover, a resilient spacer can be inserted and clamped in the cavity. This resilient spacer, which can be e.g. a cylindrical spacer, modifies the flexibility of the each longitudinal resilient protruding portion.

Preferably, each side groove has a constant cross-section and each longitudinal resilient protruding portion has a constant cross-section, which simplifies the manufacturing process, e.g. by extrusion.

According to a preferred embodiment, a sensor is received in one of the side grooves and fixed relative to the housing such that at least when the slider is in a reading position the sensor faces at an air gap distance an encoder fixed to slider. The sensor is both protected by the cover and readily accessible, outside the longitudinal internal cavity of the tubular housing. This means in particular that the sensor can be provided as an optional feature of the linear motion guide assembly depending on the actual needs of the customer. It can also be retrofitted if necessary. The encoder can be a surface of the slider or a separate component, e.g. a magnetic encoder. The sensor and encoder can be used to detect a position or speed of the slider, or to provide an identification of a specific type of slider if different sliders are available for the same housing.

According to one embodiment, the encoder extends over a substantial part of a length of the slider, such that when the slider is at any given position over the sensor, the sensor is at the air gap distance of the encoder.

Preferably the sensor is connected to an electronic circuit fixed relative to tubular housing.

According to still another aspect of the invention, there is provided a linear motion guide assembly comprising:
- a tubular housing provided with a longitudinal internal cavity for accommodating a linear drive, a longitudinal slit between the longitudinal cavity and an outer face of the housing and a pair of longitudinal side grooves formed on the outer face of the housing on each side of the central slit, each of the side groove having opposed concave side wall portions;
- a cover band for covering the longitudinal slit and side grooves, the cover band being provided with a pair of longitudinal resilient protruding portions each arranged so as to be releasably engaged and clamped in a respective one of the pair of side grooves of the housing;
- a slider sliding or rolling on a longitudinal track of the housing between two end positions, the slider being coupled to the linear drive through the longitudinal slit, the slider having two longitudinal ends and being provided with guiding means for lifting a portion of the cover band between the longitudinal ends of the slider on a path out of engagement with the side grooves;

characterised in that it further comprises a sensor device comprising at least a first sensor part received in one of the side grooves and fixed relative to the housing and a second sensor part fixed relative to the slider such that at least when the slider is in a reading position the first and second sensor parts face each other at an air gap distance. The sensor is both protected by the cover and readily accessible, outside the longitudinal internal cavity of the tubular housing. This means in particular that the sensor can be provided as an optional feature of the linear motion guide assembly depending on the actual needs of the customer. It can also be retrofitted if necessary.

According to one embodiment, one of the first and second sensor parts is an encoder and the other of the first and second sensor parts is a sensor head for reading the encoder. In particular, the encoder can be a magnetic encoder.

According to one embodiment, the encoder is the first sensor part received in one of said grooves. The encoder can extend over a substantial part of the longitudinal slit and define a reading interval of the slider, such that when the slider is at any given position in the reading interval, the second sensor part is at the air gap distance of the encoder. In this embodiment, the sensor head is preferably connected to an electronic circuit fixed relative to the slider.

According to another embodiment, the encoder is the second sensor part fixed relative to the slider. In particular, the encoder can extend over a substantial part of a length of the slider, such that when the slider is at any given position over the sensor head, the sensor head is at the air gap distance of the encoder. The encoder can be a surface of the slider or a separate component, e.g. a magnetic encoder. The sensor and encoder can be used to detect a position or speed of the slider, or to provide an identification of a specific type of slider if different sliders are available for the same housing. In this embodiment, the sensor head is preferably connected to an electronic circuit fixed relative to tubular housing.

### DESCRIPTION OF THE FIGURES

Illustrative embodiments of the invention will now be described, purely by way of examples and without limitation to the scope of the claims, and with reference to the accompanying drawings, in which:
- Fig. 1 is an isometric view of a linear motion guide assembly according to one embodiment of the invention;
- Fig. 2 is a schematic longitudinal section of the linear motion guide assembly of Fig. 1.
- Fig. 3 is a simplified schematic cross-section of the linear motion guide assembly of Fig. 1 along the plane III-III of Fig. 2;
- Fig. 4 is a simplified schematic cross-section of the linear motion guide assembly of Fig. 1 along the plane IV-IV of Fig. 2;
- Fig. 5 is a simplified schematic cross-section of the linear motion guide assembly of Fig. 1 along the plane V-V of Fig. 2;
- Fig. 6 is a detail of from Fig. 5;
- Fig. 7 is another detail from Fig.5;
- Fig. 8 is a detail of a variant of the assembly of Fig.1;
- Fig.9 is a detail of a variant of the assembly of Fig. 1.

Corresponding reference numerals refer to the same or corresponding parts in each of the figures.

### DETAILED DESCRIPTION OF A PREFERED EMBODIMENT

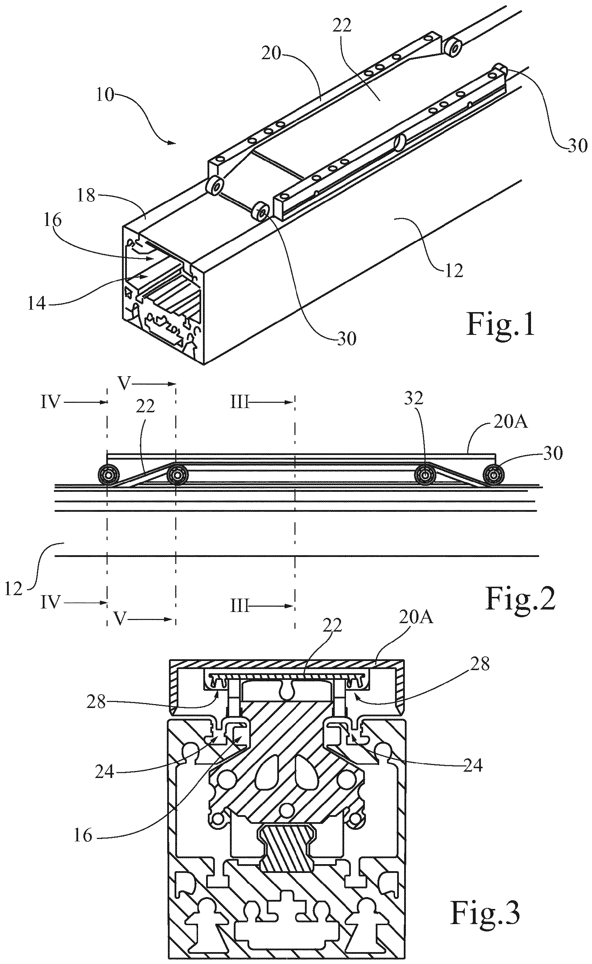

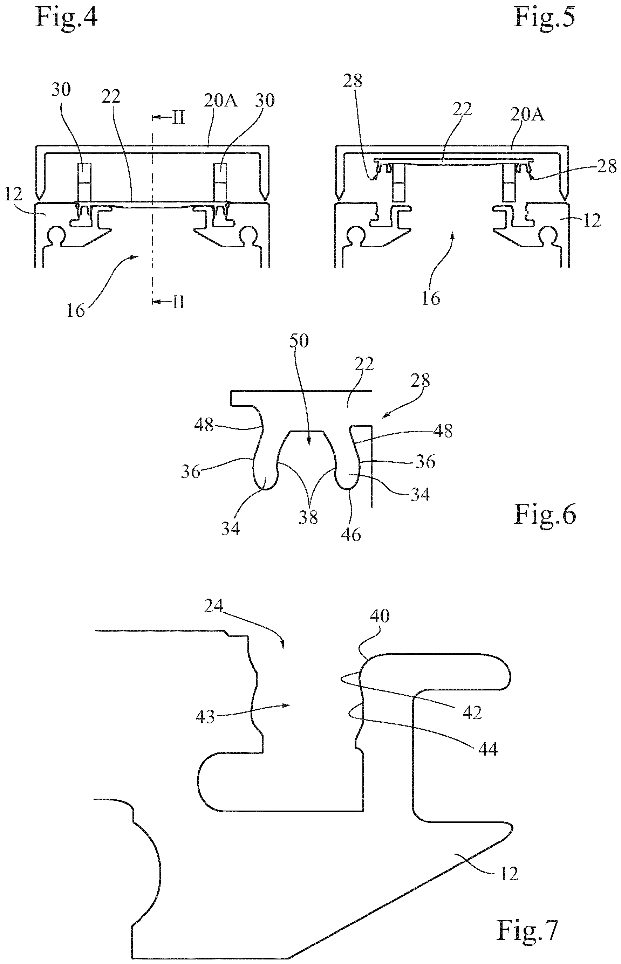

Referring to Figs. 1 to 7, a linear motion guide assembly 10 comprises a tubular housing 12 provided with a longitudinal internal cavity 14 for accommodating a linear drive (not shown), such as a lead screw, a ball screw, an endless toothed belt or an endless rope. A longitudinal slit 16 is provided between the longitudinal cavity 14 and an outer face 18 of the housing.

A slider 20 slides or rolls on a longitudinal track of the housing, preferably a track formed on the outer face 18. The slider 20 is coupled to a movable member of the linear drive, e.g. to a nut in the case of an a lead screw, through the longitudinal slit 16 so as to move linearly between two end positions defined by the linear drive. The slit 16 is closed by a flexible cover band 22, which is lifted out of the slit 16 at one end of the slider 20 and re-seated in the slit 16 at the other end of the slider to form a completely enclosed housing protected from environmental contamination. In Figure 1, a cover 20A of the slider 20 has been removed to reveal the path of the flexible cover band 22. A pair of longitudinal side grooves 24 is formed on the outer face 18 of the housing on each side of the central longitudinal slit 16. The cover band 22 comprises a pair of longitudinal resilient protruding portions 28 each arranged so as to be releasably engaged and clamped in a respective one of the pair of side grooves 24 of the housing. The two longitudinal ends of the slider 20 are each provided with two pairs of rollers 30, 32 for lifting a portion of the cover band between the longitudinal ends of the slider on a path out of engagement with the side grooves 24. The side grooves 24 and longitudinal resilient protruding portions 28 have constant cross-sections.

Each longitudinal resilient protruding portion 28 comprises a pair of parallel ribs 34 spaced apart from one another, each rib having a convex external face 36 facing away from the other rib and a concave internal face 38 facing the other rib. Each of the side grooves 34 has a tapered entry portion 40 converging towards a narrow portion 42 followed by a wider internal cavity 43 with opposed concave side wall portions 44. Each longitudinal resilient protruding portion 28 has a maximum width W measured between the convex faces 36 of the parallel ribs 34, which is wider than the intermediate narrow portion 42 of the respective side groove 34, a preferably slightly wider, in a non-deformed state, than the width between the concave side wall portions 44, to ensure a surface of contact between the ribs 34 and concave side wall portions 44. In cross-section, the two ribs 34 of each longitudinal resilient protruding portion 28 have distal ends 46 that converge towards one another and proximal ends 48 that converge towards one another to form a flexible pivot.

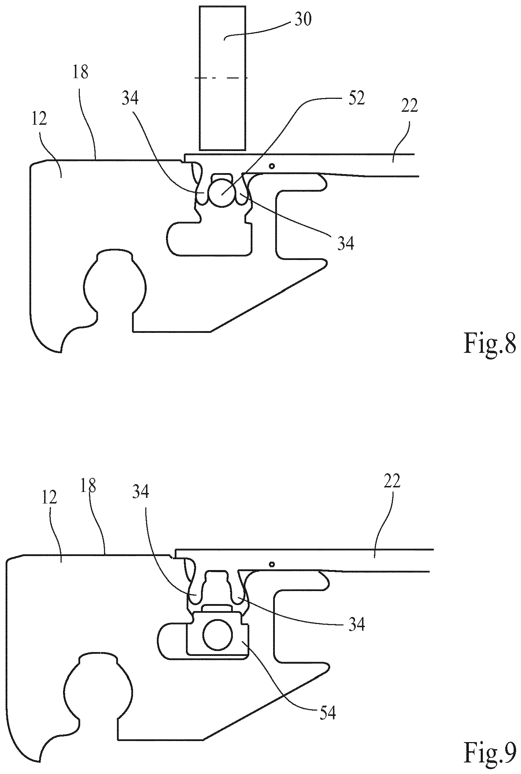

The concave internal faces 38 of the two ribs 34 of each longitudinal resilient protruding portion 28 form a cavity 50 in which a resilient spacer 52 can be inserted and clamped. The spacer 52, illustrated in Fig. 8, has preferably a cylindrical shape and can be tubular or not. When inserted in the cavity 50, the spacer 50, in contact with the concave internal faces 38 of the two ribs 34, increases the stiffness of the longitudinal resilient protruding portion 28 and the contact pressure between the outer convex faces 36 of the ribs 34 and the side wall portions of the groove 24, and as a result increases the tightness of the sealing at the interface between the groove 24 and the longitudinal resilient protruding portion 28 of the cover 22. By changing the diameter or stiffness of the resilient spacer 50, different tightness coefficients can be obtained, with the same housing 12 and cover 20.

A sensor head 54, illustrated in Fig. 9 can be received in one of the side grooves 24 and fixed relative to the housing 12 such that at least when the slider 20 is in a reading position the sensor faces at an air gap distance an encoder fixed to slider. The encoder preferably extends over a substantial part of a length of the slider 20, such that when the slider 20 is at any given position over the sensor head 54, the sensor head 54 is at the air gap distance of the encoder. The sensor head 54 is preferably connected to an electronic circuit fixed relative to tubular housing 12.

While preferred embodiments of the invention have been described, it is to be understood by those skilled in the art that the invention is naturally not limited to these embodiments. Many variations are possible. The positions of the sensor head and encoder can be permuted. The internal cross-sections of the two grooves on each side of the longitudinal slit can be different, each associated to a different longitudinal resilient protruding portion with a corresponding shape.

## Claims

1. A linear motion guide assembly (10) comprising:
- a tubular housing (12) provided with a longitudinal internal cavity (14) for accommodating a linear drive, a longitudinal slit (16) between the longitudinal cavity (14) and an outer face (18) of the housing and a pair of longitudinal side grooves (24) formed on the outer face (18) of the housing on each side of the longitudinal slit (16);
- a cover band (22) for covering the longitudinal slit (16) and side grooves (24), the cover band (22) being provided with a pair of longitudinal resilient protruding portions (28) each arranged so as to be releasably engaged and clamped in a respective one of the side grooves (24) of the housing and each comprising a pair of parallel ribs (34) spaced apart from one another, each rib (34) having an external face (36) facing away from the other rib (34) and an internal face (38) facing the other rib (34);
- a slider (20) sliding or rolling on a longitudinal track of the housing (20) between two end positions, the slider (20) extending through the longitudinal slit (16) to be coupled to the linear drive, the slider (20) having two longitudinal ends and being provided with guiding means (30, 32) for lifting a portion of the cover band (22) between the longitudinal ends of the slider (20) on a path out of engagement with the side grooves (24);
**characterised in that** each of the longitudinal side grooves (24) has opposed concave side wall portions (44), the external face (36) of each rib (34) being convex, facing and contacting a respective one of the opposed concave side wall portions (44) when the pair of longitudinal resilient protruding portions (28) is clamped in the side grooves (24).

2. The linear motion guide assembly of claim 1, **characterised in that** each of the side grooves (24) has a narrow portion (42) opening into a wider internal cavity (43).

3. The linear motion guide assembly of claim 2, **characterised in that** each of the side grooves (24) has a tapered entry portion (40) converging towards the narrow portion (42).

4. The linear motion guide assembly of claim 2 or claim 3, **characterised in that** each longitudinal resilient protruding portion (28) has a maximum width measured between the convex external faces (36) of the parallel ribs (34), which is wider than the intermediate narrow section (42) of the respective side groove (24).

5. The linear motion guide assembly of any one of the preceding claims, **characterised in that** in cross-section the two ribs (34) of each longitudinal resilient protruding portion have distal ends (46) that converge towards one another.

6. The linear motion guide assembly of any one of the preceding claims, **characterised in that** in cross-section the convex faces (36) of the two ribs of each longitudinal resilient protruding portion have proximal ends (48) that converge towards one another.

7. The linear motion guide assembly of claim 6, **characterised in that** the ribs have flexible proximal end.

8. The linear motion guide assembly of any one of the preceding claims, **characterised in that** the internal faces (38) are concave faces.

9. The linear motion guide assembly of claim 8, **characterised in that** the concave internal faces (38) of the two ribs (34) of each longitudinal resilient protruding portion (28) form a cavity.

10. The linear motion guide assembly of claim 9, further comprising a resilient spacer (52), inserted and clamped in the cavity.

11. The linear motion guide assembly of any one of the preceding claims, **characterised in that** each side groove (24) has a constant cross-section.

12. The linear motion guide assembly of any one of the preceding claims, **characterised in that** each longitudinal resilient protruding portion (28) has a constant cross-section.

13. The linear motion guide assembly of any one of the preceding claims, **characterised in that** it further comprises a sensor (54) received in one of the side grooves and fixed relative to the housing such that at least when the slider is in a reading position the sensor (54) faces at an air gap distance an encoder fixed to slider.

14. The linear motion guide assembly of claim 13, **characterised in that** the encoder extends over a substantial part of a length of the slider (20), such that when the slider (20) is at any given position over the sensor (54), the sensor (54) is at the air gap distance of the encoder.

15. The linear motion guide assembly of any one of claims 13 or 14, **characterised in that** the sensor (54) is connected to an electronic circuit fixed relative to tubular housing.

## Patentansprüche

1. Lineare Bewegungsführungsgruppe (10), umfassend:
- ein röhrenförmiges Gehäuse (12), das mit einer länglichen internen Ausnehmung (14) bereitgestellt ist, um einen linearen Antrieb aufzunehmen, einem länglichen Spalt (16) zwischen der länglichen Ausnehmung (14) und einer Außenseite (18) des Gehäuses und ein Paar länglicher Seitenrillen (24), die auf der Außenfläche (18) des Gehäuses auf jeder Seite des länglichen Spalts (16) geformt sind;
- ein Abdeckband (22) zum Abdecken des länglichen Spalts (16) und der Seitenrillen (24), wobei das Abdeckband (22) mit einem Paar länglicher, federnder hervorstehender Abschnitte (28) bereitgestellt ist, die jeweils derart angeordnet sind, dass sie lösbar in einer jeweiligen Seitenrille (24) des Gehäuses eingegriffen und eingespannt sind und jeweils ein Paar paralleler Rippungen (34) umfassen, die voneinander beabstandet sind, wobei jede Rippung (34) eine Außenseite (36), die von der anderen Rippung (34) abgewendet ist, und eine Innenseite (38), die zu der anderen Rippung (34) gewendet ist, hat;
- einen Schieber (20), der auf einer länglichen Spur des Gehäuses (20) zwischen zwei Endpositionen gleitet oder rollt, wobei sich der Schieber (20) durch den länglichen Schlitz (16) erstreckt, um an dem linearen Antrieb gekoppelt zu sein, wobei der Schieber (20) zwei längliche Enden hat und mit Führungsmitteln (30, 32) zum Heben eines Abschnitts des Abdeckbandes (22) zwischen den länglichen Enden des Schiebers (20) auf einem Weg heraus aus dem Eingreifen in die Seitenrillen (24) bereitgestellt ist;
**dadurch gekennzeichnet, dass** jede der länglichen Seitenrillen (24) entgegengesetzte konkave Seitenwandabschnitte (44) hat, wobei die Außenseite (36) jeder Rippung (34) konvex ist, einer der jeweiligen entgegengesetzten konkaven Seitenwandabschnitte (44) gegenüberliegt und sie kontaktiert, wenn das Paar länglicher, federnder, hervorstehender Abschnitte (28) in den Seitenrillen (24) eingespannt ist.

2. Lineare Bewegungsführungsgruppe gemäß Anspruch 1, **dadurch gekennzeichnet, dass** jede der Seitenrillen (24) einen engen Abschnitt (42) hat, der sich in eine breitere interne Ausnehmung (43) öffnet.

3. Lineare Bewegungsführungsgruppe gemäß Anspruch 2, **dadurch gekennzeichnet, dass** jede Seitenrille (24) einen verjüngten Eingangsabschnitt (40) hat, der zu dem engen Abschnitt (42) zusammenläuft.

4. Lineare Bewegungsführungsgruppe gemäß Anspruch 2 oder Anspruch 3, **dadurch gekennzeichnet, dass** jeder längliche federnde, hervorstehende Abschnitt (28) eine maximale Breite hat, die zwischen den konvexen externen Seiten (36) der parallelen Rippungen (34) gemessen ist, welche breiter ist als der enge Zwischenquerschnitt (42) der jeweiligen Seitenrille (24).

5. Lineare Bewegungsführungsgruppe gemäß irgendeinem der voranstehenden Ansprüche, **dadurch gekennzeichnet, dass** in dem Querschnitt die zwei Rippungen (34) jedes länglichen federnden hervorstehenden Abschnitts distale Enden (46) haben, die zueinander zusammenlaufen.

6. Lineare Bewegungsführungsgruppe gemäß irgendeinem der voranstehenden Ansprüche, **dadurch gekennzeichnet, dass** die konvexen Seiten (36) der zwei Rippungen jedes länglichen federnden hervorstehenden Abschnitts im Querschnitt proximale Enden (48) haben, die zueinander zusammenlaufen.

7. Lineare Bewegungsführungsgruppe gemäß Anspruch 6, **dadurch gekennzeichnet, dass** die Rippungen flexible proximale Enden haben.

8. Lineare Bewegungsführungsgruppe gemäß irgendeinem der voranstehenden Ansprüche, **dadurch gekennzeichnet, dass** die Innenseiten (38) konkave Seiten sind.

9. Lineare Bewegungsführungsgruppe gemäß Anspruch 8, **dadurch gekennzeichnet, dass** die konkaven Innenseiten (38) der zwei Rippungen (34) jedes länglichen federnden hervorstehenden Abschnitts (28) eine Ausnehmung bilden.

10. Lineare Bewegungsführungsgruppe gemäß Anspruch 9, weiterhin umfassend einen federnden Abstandshalter (52), der in die Ausnehmung eingefügt und eingespannt ist.

11. Lineare Bewegungsführungsgruppe gemäß irgendeinem der voranstehenden Ansprüche, **dadurch gekennzeichnet, dass** jede Seitenrille (24) einen konstanten Querschnitt hat.

12. Lineare Bewegungsführungsgruppe gemäß irgendeinem der voranstehenden Ansprüche, **dadurch gekennzeichnet, dass** jeder längliche, federnde, hervorstehende Abschnitt (28) einen konstanten Querschnitt hat.

13. Lineare Bewegungsführungsgruppe gemäß irgendeinem der voranstehenden Ansprüche, **dadurch gekennzeichnet, dass** sie weiterhin einen Sensor (54) umfasst, der in einer der Seitenrippungen aufgenommen ist und relativ zu dem Gehäuse derart befestigt ist, dass wenigstens, wenn der Schieber sich in einer Leseposition befindet, der Sensor (54) in einer Luftspaltentfernung einem am Schieber befestigten Codierer gegenüberliegt.

14. Lineare Bewegungsführungsgruppe gemäß Anspruch 13, **dadurch gekennzeichnet, dass** sich der Codirer über einen wesentlichen Teil einer Länge des Schiebers (20) derart erstreckt, dass, wenn der Schieber (20) sich an irgendeiner bestimmten Position über dem Sensor (54) befindet, der Sensor (54) sich in der Luftspaltentfernung des Codierers befindet.

15. Lineare Bewegungsführungsgruppe gemäß irgendeinem der Ansprüche 13 oder 14, **dadurch gekennzeichnet, dass** der Sensor (54) an einen elektronischen Schaltkreis angeschlossen ist, der relativ zu dem röhrenförmigen Gehäuse befestigt ist.

## Revendications

1. Ensemble guide de mouvement linéaire (10) comprenant:
- un boitier tubulaire (12) muni d'une cavité interne longitudinale (14) permettant de loger un entrainement linéaire, d'une fente longitudinale (16) entre la cavité longitudinale (14) et une face externe (18) du boitier et d'une paire de rainures latérales longitudinales (24) formées sur la face externe (18) du boitier, de chaque côté de la fente longitudinale (16) ;
- une bande de couverture (22) permettant de couvrir la fente longitudinale (16) et les rainures latérales (24), la bande de couverture (22) étant munie d'une paire de portions élastiques longitudinales en saillie (28), chacune agencée de manière à être engagée, et pincée, de manière détachable, dans l'une, respective, des rainures latérales (24) du boitier et comprenant chacune une paire de nervures parallèles (34) espacées l'une de l'autre, chaque nervure (34) ayant une face externe (36) tournée à l'opposé de l'autre nervure (34) et une face interne (38) qui fait face à l'autre nervure (34) ;
- un coulisseau (20) qui coulisse ou qui roule sur une piste longitudinale du boitier (20) entre deux positions d'extrémité, le coulisseau (20) s'étendant à travers la fente longitudinale (16) afin d'être couplé à l'entrainement linéaire, le coulisseau (20) ayant deux extrémités longitudinales et étant muni de moyens de guidage (30, 32) permettant de lever une portion de la bande de couverture (22) entre les extrémités longitudinales du coulisseau (20) sur une trajectoire hors de l'engagement dans les rainures latérales (24) ;
**caractérisé en ce que** chacune des rainures latérales longitudinales (24) possède des portions de parois latérales concaves opposées (44), la face externe (36) de chaque nervure (34) étant convexe, faisant face à et étant en contact avec l'une, respective, des portions de parois latérales concaves opposées (44), lorsque la paire de portions élastiques longitudinales en saillie (28) est pincée dans les rainures latérales (24).

2. Ensemble guide de mouvement linéaire selon la revendication 1, **caractérisé en ce que** chacune des rainures latérales (24) possède une portion étroite (42) qui débouche dans une cavité interne plus large (43).

3. Ensemble guide de mouvement linéaire selon la revendication 2, **caractérisé en ce que** chacune des rainures latérales (24) possède une portion d'entrée chanfreinée (40) qui converge en direction de la portion étroite (42).

4. Ensemble guide de mouvement linéaire selon la revendication 2 ou la revendication 3, **caractérisé en ce que** chaque portion élastique longitudinale en saillie (28) a une largeur maximale mesurée entre les faces externes convexes (36) des nervures parallèles (34), qui est supérieure à la section étroite intermédiaire (42) de la rainure latérale (24) respective.

5. Ensemble guide de mouvement linéaire selon l'une quelconque des revendications précédentes, **caractérisé en ce que**, en coupe transversale, les deux nervures (34) de chaque portion élastique longitudinale en saillie ont des extrémités distales (46) qui convergent l'une vers l'autre.

6. Ensemble guide de mouvement linéaire selon l'une quelconque des revendications précédentes, **caractérisé en ce que**, en coupe transversale, les faces convexes (36) des deux nervures de chaque portion élastique longitudinale en saillie ont des extrémités proximales (48) qui convergent l'une vers l'autre.

7. Ensemble guide de mouvement linéaire selon la revendication 6, **caractérisé en ce que** les nervures ont une extrémité proximale souple.

8. Ensemble guide de mouvement linéaire selon l'une quelconque des revendications précédentes, **caractérisé en ce que** les faces internes (38) sont des faces concaves.

9. Ensemble guide de mouvement linéaire selon la revendication 8, **caractérisé en ce que** les faces internes concaves (38) des deux nervures (34) de chaque portion élastique longitudinale en saillie (28) forment une cavité.

10. Ensemble guide de mouvement linéaire selon la revendication 9, comprenant en outre une entretoise élastique (52), insérée et pincée dans la cavité.

11. Ensemble guide de mouvement linéaire selon l'une quelconque des revendications précédentes, **caractérisé en ce que** chaque rainure latérale (24) a une section transversale constante.

12. Ensemble guide de mouvement linéaire selon l'une quelconque des revendications précédentes, **caractérisé en ce que** chaque partie élastique longitudinale en saillie (28) a une section transversale constante.

13. Ensemble guide de mouvement linéaire selon l'une quelconque des revendications précédentes, **caractérisé en ce qu'**il comprend en outre un capteur (54) reçu dans l'une des rainures latérales par rapport au boitier, de telle sorte que, au moins lorsque le coulisseau se trouve dans une position de lecture, le capteur (54) fait face à un encodeur fixé au coulisseau à une distance d'entrefer.

14. Ensemble guide de mouvement linéaire selon la revendication 13, **caractérisé en ce que** l'encodeur s'étend sur une partie substantielle d'une longueur du coulisseau (20), de telle sorte que, lorsque le coulisseau (20) se trouve dans n'importe quelle position donnée au-dessus du capteur (54), le capteur (54) se trouve à la distance d'entrefer de l'encodeur.

15. Ensemble guide de mouvement linéaire selon l'une quelconque des revendications 13 ou 14, **caractérisé en ce que** le capteur (54) est connecté à un circuit électronique fixe par rapport au boitier tubulaire.
